# EUROPEAN PATENT SPECIFICATION

(11) **EP 4 334 775 B1**
(45) Date of publication and mention of the grant of the patent: **02.07.2025**
(21) Application number: 22724421.7
(22) Date of filing: 03.05.2022
(51) Int. Cl.: G02C 5/14, G02C 5/18

(54) **SPECTACLE ROD WITH FRICTION ELEMENT AT EAR BEND**
BRILLENSTANGE MIT REIBUNGSELEMENT AM OHRENBOGEN
TIGE DE LUNETTES AVEC ÉLÉMENT DE FROTTEMENT AU NIVEAU DE LA COURBURE DE L'OREILLE

(30) Priority: 03.05.2021 DK PA202170202
(43) Date of publication of application: 13.03.2024
(73) Proprietor: Lindberg A/S, 8230 Aabyhøj (DK)
(72) Inventor: LINDBERG, Henrik, 8240 Risskov (DK); BØJVAD, Lars, 8270 Højbjerg (DK); BOYE-NIELSEN, Hans, 8382 Hinnerup (DK); MACH, Thomas, 8541 Skødstrup (DK); ANDERSEN, Christina Bak, 8920 Randers NV (DK)
(74) Representative: Patrade A/S
(86) International application number: PCT/DK2022/050090
(87) International publication number: WO 2022/233378

(56) References cited:
- WO-A1-2017/167342
- CN-U- 205 656 381
- JP-A- H10 142 559
- US-A1- 2011 170 052
- US-B1- 7 165 838

## Description

### Field of the invention

The present invention relates to a spectacle rod with a first end part intended for connection with a front piece, as well as a second end part intended to be bent to form an ear bend, said spectacle rod having a longitudinal direction and a transverse direction, and said spectacle rod being formed, at least above the second end part of the spectacle rod, by a plate-shaped rod having side faces as well as bottom and top faces, and wherein a friction element made from an elastic, compliant material is connected to the plate-shaped rod in a position at the ear bend for contact behind the ear of a user, and wherein the plate-shaped rod has a first transverse protrusion, which first transverse protrusion is directed in the transverse direction and obliquely in the longitudinal direction in order to form, together with the second end part of the metal rod, a longitudinally open recess, and wherein, in the first end part of the friction element, a first transverse hole is provided for receiving the first transverse protrusion of the plate-shaped rod, and wherein the plate-shaped rod is a metal rod, and wherein the friction element is conduit-shaped so that the conduit walls and bottom cover the side faces and the bottom face of the metal rod, and wherein the first transverse hole of the friction element is formed in the material quantity and directed in the transverse direction in order to receive the first transverse protrusion of the metal rod, and wherein elastic material at the first end part of the friction element is received in the open recess of the metal rod, so that the first transverse protrusion and the recess form first retaining means, and wherein between the walls and the bottom of the conduit and the side faces of the metal rod, further retaining means are provided which prevent the displacement of the friction element in the longitudinal direction and transverse direction of the metal rod.

Bottom and top faces refer to the orientation of the spectacle rod during use, and the side faces will connect the top and bottom faces.

### Background of the invention

Spectacle rods are used for a spectacle frame comprising a front piece and two spectacle rods connected to the front piece, preferably via respective hinges, whereby the spectacle rods are pivotally connected to the front piece.

It has been known for many years to manufacture spectacle rods from plastic in the form of acetate.

Likewise, it has been known for many years to manufacture spectacle rods from metal, including titanium.

However, the invention also applies to spectacle rods made from other types of material, although it will be explained in the following specifically in connection with titanium.

It has been known to provide the spectacle rods with the friction element, which should preferably be replaceable by the user. This friction element is often a tube pulled over a metal rod in a position at the ear bend for contact behind the ear of a user. This is typically used on metal spectacle rods in consideration of the comfort of the user, but is also used on plastic spectacle rods. This avoids direct contact between plastic and sweat, grease and other excretions that are degrading to the plastic. However, these tubes may give rise to impaired comfort, since the edges of the tube may feel uncomfortable to the user. Furthermore, there is a risk of the tube being displaced along the metal rod so that it does not retain an optimal location at the ear bend.

It is proposed, for example, in US 6 045 221, to place a friction element in a recessed manner in a recess in the side of the first end of the metal rod, which is intended for connection with a front piece. Plastics and especially acetate are very sensitive to notch effects, which means that heavy dimensional transitions cannot be made in the spectacle rod, which is especially true for the ear bend. This results in limitations when designing the plastic rod and the bracing element. The US specification thus also shows a friction element in the form of a tube for use in the ear bend.

Acetate is a soft plastic material and is therefore suitable for bending in a plane for the formation of an ear bend, adapted for placement behind the ear of a user, and for bending in a second plane for adaptation according to the shape of the heads of the users. Due to the softness of acetate, the spectacle rods have previously had a considerable size, which has made bending difficult and made a pair of spectacles undesirably heavy and full behind the ear.

It is a desire to minimize the size of the spectacle rod for the sake of the comfort of the user, both in terms of weight and fullness. However, thereby strength and shape stability become insufficient.

Furthermore, from US 4 563 066 is known a spectacle rod formed by a metal rod. At its end at the ear bend, the metal rod is covered by a plastic sheath, which is fixed on the metal rod. In this area, the metal rod is provided with serrated protrusions to ensure, together with a gluing, the retention of the plastic sheath on the metal rod. The plastic sheath is enclosed in a teardrop-shaped terminus of a silicone sheath attached to the metal rod by the ear bend. There is no possibility of replacing the combined plastic-silicone sheath.

Furthermore, from KR20200001172 U is known a spectacle rod of the type initially mentioned. It describes a spectacle rod, which at its end has a U-bent end part, wherein the first transverse protrusion is placed on the outermost folded part. Thereby, the U-bent part will contribute to pressing the first transverse protrusion into the first transverse hole. The friction element is formed by a sheath, wherein the first transverse hole is formed in the bore of the sheath, enveloping the entire U-bent end part of the metal rod.

Furthermore WO2017/167342 A1 discloses a spectacle rod of the type mentioned in the first paragraph of the description and as defined in the preamble of claim 1. However, this document does not disclose a spectacle rod which enables secure retention of a friction element on a metal rod in a simple manner and ensures a covering of the outer end of the metal rod by the friction element.

### Object of the invention

It is the object of the present invention to provide a spectacle rod, which solves the problems of the known spectacle rods and which enables secure retention of a friction element on a metal rod in a simple manner, so that the outer end of the metal rod is covered by the friction element, which makes it possible for the user to easily and simply replace the friction element themselves.

In an additional aspect, the object is to provide a metal spectacle rod, wherein the metal rod has a rectangular cross-section, and wherein the friction element encloses a small side face and two large side faces of the metal rod in a largely U-shaped conduit in the friction element.

### Description of the invention

According to the present invention, this is achieved by a spectacle rod of the type initially mentioned, as defined in the preamble of claim 1, which is distinctive in that the first transverse protrusion of the plate-shaped rod is provided at its outermost second end, in that the longitudinally open recess is form, together with the outermost second end part of the metal rod, which longitudinally open recess has at its opening a smaller cross-section than at a central part of the recess, in that the friction element at a first end of the conduit is closed by a material quantity at the first end of the friction element, in that the first transverse hole of the friction element is also directed obliquely in the longitudinal direction, in that elastic material at the first end part of the friction element is received in the open recess of the metal rod in an elastically compressed state.

When the friction element is mounted on the metal rod, the first transverse protrusion of the metal rod will be pressed into the first transverse hole of the friction element, at the same time as an elastic material is pressed into the longitudinally open recess. Due to the elastic compliance of the friction element material, a press fit will have been established. This achieves secure retention of the friction element on the metal rod.

Since the open recess at its opening has a smaller cross-section than at a central part of the recess, the elastic material will be compressed, thus ensuring that the friction element cannot be inadvertently displaced longitudinally relative to the metal rod.

The oblique orientation of the first transverse protrusion of the spectacle rod ensures that the first end part of the friction element cannot be inadvertently displaced in the transverse direction relative to the metal rod.

Thus, the protrusion and the recess may be referred to as first retaining means that ensure the retention of the friction element on the metal rod, at least at the outermost end of the metal rod.

To ensure that the entire length of the friction element cannot be inadvertently displaced in the transverse direction relative to the metal rod, additional retaining means are provided to prevent this. Such means may be mechanical engagement, gluing or similar mutual retention. If gluing is used, it must be gluing of a type that can be easily broken so that a user may replace the friction element.

The first hole in the friction element may be manufactured with a size smaller than that of the first transverse protrusion of the metal rod, so that the first transverse protrusion of the metal rod is received therein with a clamping effect due to the elastic compliance of the material. This provides additional safety against accidental displacement of the friction element relative to the metal rod.

When using a conduit-shaped friction element instead of the known bushing/sheath, it will furthermore be possible that the upper edge area of the metal rod is visible at the upper open edge of the friction element conduit. It will also be possible that a narrow edge area of the metal rod is located above the friction element and is thus visible to a user. This is a desirable design element of spectacles.

The edge area protruding above the friction element conduit will have such a small extent above the friction element that there is no risk of it coming into contact with the user.

A further aspect that must be observed is that the friction element is a 'service element' which, over time, must be replaced. It is therefore important that this element can be easily and quickly replaced by the user. By having the metal rod extend a small distance above the upper side of the friction element, it will be easier for the user to get a grip at the upper side of the friction element and pull or press this in the transverse direction to release the friction element from the metal rod.

If the friction element were to extend to a position off or above the upper side of the metal rod, it would be more difficult to make the transverse displacement, since the fingers of the user cannot establish an unambiguous grip for transverse displacement of the silicone element, because there is a risk that the fingers will also press against the upper side of the metal rod.

The word 'accidental', as used in this description, means that during the normal use of spectacles, there can be no displacement of the friction element in the longitudinal direction or transverse direction relative to the metal rod. However, when applying a manual force, which can be exerted by a user, an intentional displacement of the friction element in the longitudinal direction or transverse direction relative to the metal rod may be made to allow the replacement of the friction element.

In principle, a spectacle rod includes a rod element and a friction element. In the present application, explanations have been given in which the rod element is referred to as a metal rod.

In the present application, plate-shape means a metal rod with a rectangular cross-sectional shape with a first side that is significantly smaller than the second side. For example, the ratio may be from 1:4 - 1:10 or even greater. The first side may thus be referred to as the thickness of the plate, and the second side may be referred to as the height of the metal rod. It is generally desired for a spectacle rod to have as small a thickness as possible in the area at the ear of the user.

The metal rod will thus, in the second end part, have two large side faces as well as two small side faces, forming the bottom and top faces. The cross-section may be the same or different over the length of the metal rod. Thus, it is possible for the metal rod to have a second and greater thickness in the first end part as well as in an intermediate part connecting the first and second end parts. Likewise, in the first end part and the intermediate part, the metal rod may have other cross-sectional shapes than rectangular ones.

A metal rod provides a shape stability for the spectacle rod. This shape stability will not only be provided in the plane of the ear bend, but will also be able to establish a shape stability when the metal rod is bent in the direction perpendicular to the ear bend to establish an adaptation to the head shape of the user.

According to an embodiment, the spectacle rod of the invention is distinctive in that the metal rod at its bottom face is provided with transverse second protrusions for releasable snap engagement with second holes in the bottom of the conduit, wherein the second protrusions at their connection to the metal rod have a smaller cross-section than that of the second protrusions at a distance from the metal rod, so that the second protrusions are retained in the second holes at the bottom of the conduit due to the elastic compliance of the friction element material.

In order to obtain a particularly simple snap effect, it is preferred that the friction element is made of an elastically compliant material. In this way, the user will be able to establish the snap effect in a particularly simple way. At the same time, the elastic compliance of the friction element material will help to ensure the safe retention of the friction element. Likewise, the elastic compliance will make it easy for the user to establish the snap engagement compared to friction elements in which a hard material is provided.

According to a further embodiment, the spectacle rod of the invention is distinctive in that a transverse protrusion, preferably a hook-shaped protrusion, is formed at the opening of the recess on the first transverse protrusion and/or on the outermost second end part of the metal rod.

In the present patent application, 'hook-shape' means a protrusion that does not necessarily have an extent in which an outer end extends over an arc of 180° or more. The protrusion need only have an extension in the transverse direction relative to the protrusion or the outermost second end part of the metal rod. A hook-shaped protrusion may thus have a shape that extends over an arc of 90° or less. It is preferable that the transverse protrusion has a curvature with an arc of 90° or less.

The protrusion may have an arcuate shape. Alternatively, it may be angular and formed by rectilinear edges of the protrusion or a combination of curved and rectilinear edges of the protrusion.

By having a hook-shaped protrusion formed at the opening of the recess, a particularly safe retention of the material of the friction element in the recess in the metal rod is achieved.

The hook-shape ensures that it takes a greater force to lead the friction element material out of the recess, which reduces the risk of an accidental separation.

It is preferable that the hook-shaped protrusion is located on the first transverse protrusion. Alternatively, it may be provided on the outermost second end part of the metal rod. In both situations, the opening will not only have a smaller cross-section, but will additionally be equipped with a hook-shape, which provides safe retention of the elastic material inside the recess.

According to a further embodiment, the spectacle rod of the invention is distinctive in that the first hole in the friction element is manufactured with a size smaller than that of the first protrusion of the metal rod, so that the first protrusion of the metal rod is received therein with a clamping effect.

This ensures greater safety against accidental separation, since the first protrusion of the metal rod must be pressed into the first hole, thereby compressing the elastic material of the friction element. The friction element will thereby establish a clamping effect on the first protrusion of the metal rod.

The first hole in the friction element may be manufactured with a size smaller than that of the first transverse protrusion of the metal rod, so that the first transverse protrusion of the metal rod is received therein with a clamping effect due to the elastic compliance of the material. This provides additional safety against accidental displacement of the friction element relative to the metal rod.

According to a further embodiment, the spectacle rod of the invention is distinctive in that the conduit is formed with a smaller width than the thickness of the metal rod, so that the conduit side walls are in elastic abutment with the side faces of the metal rod.

It is possible to establish a clamping effect against the side faces of the metal rod due to the elastic compliance of the conduit side walls. However, the side walls will be thin to ensure as little material as possible in the ear bend. However, the conduit side walls will be in elastic abutment with the side faces of the metal rod when the conduit is manufactured with a smaller width than the thickness of the metal rod. This establishes a retention while avoiding the risk of impurities accumulating in a gap between the metal rod and the conduit side walls.

Alternatively, the conduit may be formed with the same width as the thickness of the metal rod, so that the conduit side walls are in abutment with the side faces of the metal rod without concurrent elastic clamping effect, but this is nevertheless a mounting without a risk of impurities accumulating in a gap between the metal rod and the conduit side walls. This may be used, for example, in conjunction with a glue joint that holds the conduit side walls against the metal rod.

According to a further embodiment, the spectacle rod of the invention is distinctive in that, in an intermediate part at the side facing the second protrusions of the metal rod, the metal rod has an abutment face for an end face of the friction element.

As the metal rod is manufactured with a abutment face on which the end face of the friction element may be in abutment, the risk of a displacement in the longitudinal direction of the metal rod is avoided. The abutment face of the metal rod may advantageously be provided by the metal rod having a recess in its bottom. The transverse second protrusions of the metal rod will thus be provided at the bottom of this recess. Thereby, an end wall of the recess might serve as the abutment face for an end face of the friction element.

According to a further embodiment, the spectacle rod of the invention is distinctive in that the friction element covers at least part of the outermost end face of the second end part of the metal rod.

In order to avoid contact between the user and the metal rod, the friction element will be manufactured so that one end of the conduit is closed. This outermost end part of the friction element, which closes the conduit, will at the same time be able to cover the outermost end face of the second end part of the metal rod. This reduces the risk of contact between the user and the metal rod. Furthermore, the friction element material at this end part will provide a material quantity that reduces the risk of the first transverse protrusion of the metal rod penetrating the friction element material thus exposing part of the metal rod.

According to a further embodiment, the spectacle rod of the invention is distinctive in that the metal rod is made of titanium.

Titanium is preferred for the manufacture of the metal rod, as this is a very light material. However, other metals may also be used for the manufacture of the metal rod.

According to a further embodiment, the spectacle rod of the invention is distinctive in that the side walls of the friction element conduit have decreasing thickness towards the side faces of the metal rod to form a smooth transition.

Since there is a smooth transition, the risk of the metal rod having an annoying effect on the user is avoided. The smooth transition between the side faces of the metal rod and the friction element will contribute to user comfort.

According to a further embodiment, the spectacle rod of the invention is distinctive in that the friction element is manufactured from elastic polymer.

Although various elastic materials may be used, it is preferable to use elastic polymer, since this has good properties for moulding with a certainty of forming the holes in the correct shape. This ensures retention without the risk of accidental release of the friction element from the metal rod.

According to a further embodiment, the spectacle rod of the invention is distinctive in that the rectangular metal rod is provided with a recess at the bottom face and that the transverse second protrusions are located at the bottom of this recess. It is then preferable for the friction element to have a length equal to that of the recess, so that at the end of the recess there is a abutment face for the end face of the friction element. This increases the certainty that the friction element cannot be displaced in the longitudinal direction relative to the metal rod.

At the same time, the extent of the spectacle rod with the friction element in the ear bend will be small, since only a small part of the friction element will extend outside the cross-section defined by the metal rod. Thus, it can be said that the friction element is located partially recessed into the metal rod, and the outer perimeter of the friction element and metal rod approaches the outer perimeter of the metal rod. This increases comfort for the user.

The metal rod may form an integral part of a hinge element used to attach the spectacle rod to a front piece. This may be done by appropriately bending the first end part of the metal rod, so that a hinge part is formed.

### Description of the drawings

In the following, the invention will be described in detail with reference to the accompanying drawings, where
- Fig. 1: shows a partial perspective view of a pair of spectacles with a spectacle rod according to the invention;
- Fig. 2: shows a side view, partly in section, of the spectacle rod of Fig. 1;
- Fig. 3: shows a partial side view of the spectacle rod of Fig. 1;
- Fig. 4: shows a top view of the spectacle rod of Fig. 3;
- Fig. 5A: shows an enlarged cross-section according to the arrows A-A of Fig. 3;
- Fig. 5B: shows a cross-section similar to Fig. 5A of a second embodiment;
- Fig. 6: shows a side view of the metal rod of Fig. 1 without a friction element attached;
- Fig. 7: shows a partial, enlarged image of the metal rod of Fig. 6;
- Fig. 8: shows a section through the friction element shown in Fig. 1;
- Fig. 9: shows a partial, enlarged image through the sectional view of Fig. 8; and
- Fig. 10: shows an enlarged, partial view of the metal rod and friction element with the friction element shown in section.

### Detailed description of the invention

In the following, identical or similar elements of the different figures of the drawings will be designated by the same reference designation. Thus, an explanation of all details associated with each individual figure will not be given.

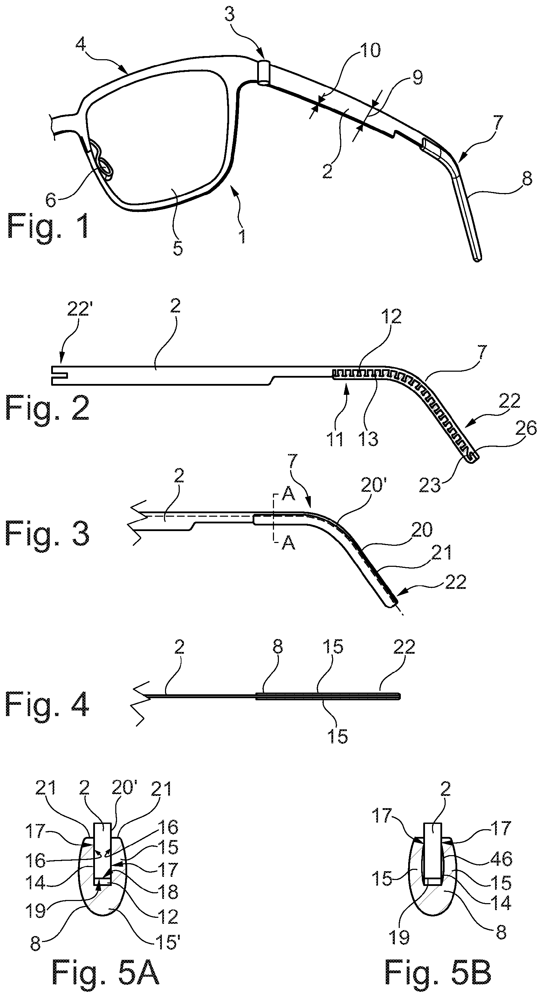

Fig. 1 shows a partial view of a pair of spectacles 1. The spectacles include a spectacle rod in the form of a metal rod 2, which is connected via a hinge 3 to a front piece 4. In the front piece 4, a spectacle lens 5 is provided in a frame. The front piece 4 further comprises a nose pad 6 for abutment with the nose of the user.

The metal rod 2 has an ear bend 7. At the ear bend 7, a friction element 8 is mounted in a position where there will be contact behind the ear of a user. The friction element 8 is manufactured from an elastic, compliant material, preferably an elastic polymer.

As can be seen, the metal rod 2 is plate-shaped, having a significantly greater height 9 than thickness 10.

Fig. 2 shows the metal rod 2 with the friction element 8 shown in section. In the bottom face of the metal rod, a recess 11 is provided, in which the friction element is partially received. In the recess 11, the metal rod is provided with a number of transverse second protrusions 12. These second protrusions 12 are mushroom-shaped or arrow-shaped, so that they have a smaller cross-section at their connection to the metal rod 2 than their cross-section at a distance from the metal rod. The protrusions 12 are mounted with a snap effect in transverse second holes 13 in the friction element 8 and will be retained therein by a clamping force exerted due to the elastic compliance of the friction element material.

It can be said that a snap effect is thereby achieved, since the protrusions 12 are pressed into the holes 13.

As is particularly clear from Figs. 3 to 5, the friction element has a conduit shape with a conduit 14 for receiving the metal rod 2. The conduit includes two side walls 15 and a bottom 15'. The side walls have surfaces 16, which are in abutment with side faces 17 of the metal rod 2. Likewise, the bottom 15' will have a bottom face 18, which is in contact with a bottom face 19 of the metal rod 2. The metal rod 2 has a top face 20 that extends over the friction element 8.

Figs. 5A and 5B show an enlarged cross-section through the spectacle rod between the transverse projections 12 on the metal rod 2.

Fig. 5A and Fig. 5B further show that the sidewalls 15 have a decreasing thickness upwards in the direction of the side faces 17 of the metal rod 2. This provides a smooth transition between the outside of the friction element and the metal rod 2. However, there is an upper side 21 on the side walls 15, which the user may use as a pressure surface when the friction element 8 is to be separated from the metal rod 2.

Fig. 5A shows an embodiment in which the conduit 14 is formed with smaller width than the thickness of the metal rod 2, so that the conduit side walls 15 are in elastic abutment with the side faces 17 of the metal rod.

Fig. 5B shows an embodiment in which the conduit 14 is formed with the same width as the thickness of the metal rod 2, so that the conduit side walls 15 are in abutment with the side faces 17 of the metal rod, without any elastic clamping effect. Between the side walls 15 and the side faces 17, a glue joint 46 is provided to ensure the retention of the friction element against the side faces 17 of the metal rod.

Fig. 3 shows an enlarged side view in the area of the ear bend 7. Fig. 3 shows a section line A-A for the position in which the sectional view of Fig. 5 is made. It can be seen from Fig. 3 that a narrow marginal edge area 20' (see also Fig. 5) on the metal rod 2 is above the upper side 21. Thus, a user will be able to easily grab hold at the upper side 21 and pull the friction element in the transverse direction to free it from the engagement with the protrusions 12 when the friction element is to be replaced.

Fig. 2 shows the metal rod 2, which has a first end 22' for attachment to the front piece, and a second end 22 farthest away from the front piece 4. At the outermost second end 22, the metal rod has a transverse first protrusion 23.

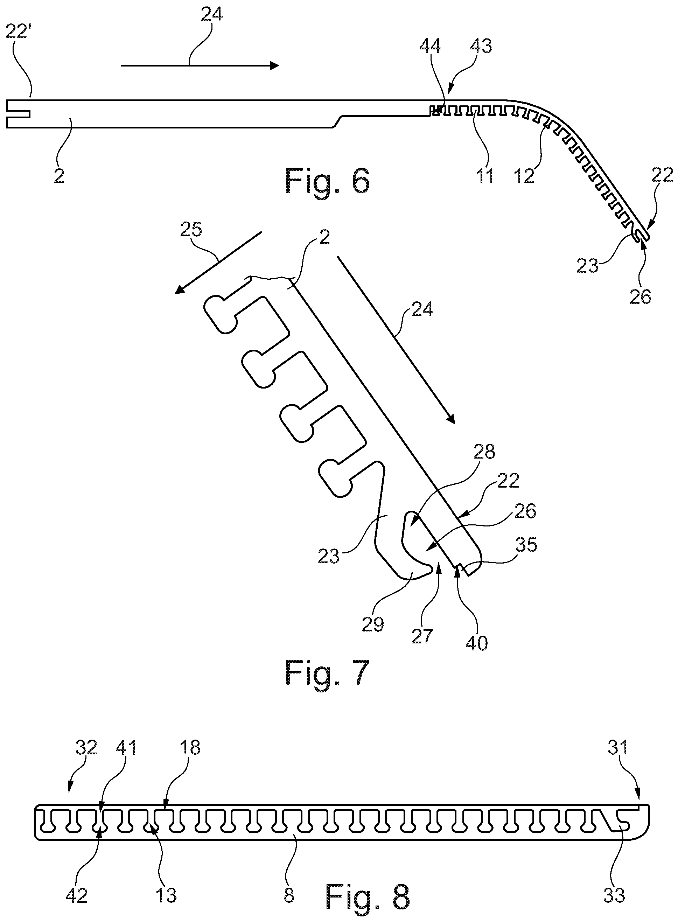

Figs. 6 and 7 show more clearly the design of the first projection 23 and the second projections 12 on the metal rod 2.

The metal rod 2 has a longitudinal direction 24 and a transverse direction 25, as indicated in Figs. 6 and 7. The longitudinal direction 24 and the transverse direction 25 of the metal rod correspond to the longitudinal direction and transverse direction of the spectacle rod.

The first protrusion 23 extends in the transverse direction 25 and with an oblique course in the longitudinal direction 24. Thus, the first projection 23 together with the outermost second end part 22 of the spectacle rod will form a recess 26 that is open in the longitudinal direction.

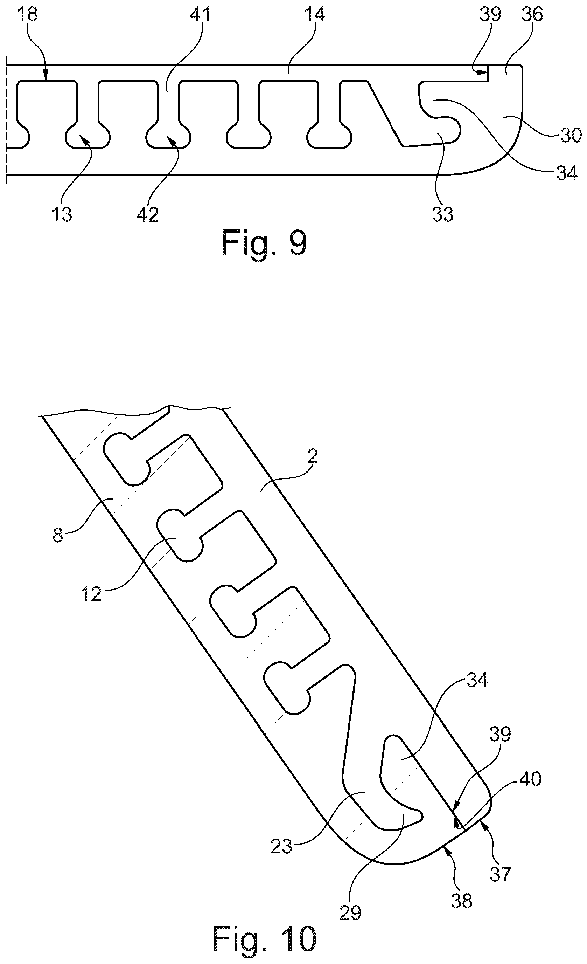

The recess 26 has an opening 27, which has a smaller cross-section than the cross-section that will be provided at a central part 28 of the recess 26. At the opening 27 of the recess, the first protrusion 23 is provided with a hook-shaped protrusion 29. This hook-shaped protrusion 29 helps to create the smaller opening 27 and at the same time will contribute to a safe retention of elastically compliant material from the friction element when the friction element is mounted on the metal rod, as illustrated for example in Fig. 2 and Fig. 10.

Figs. 8 and 9 show sectional views through the friction element 8. As is particularly clear from Fig. 9, the friction element conduit 14 is closed by a material quantity 30 at the first end 31 of the friction element. At the second end 32 of the friction element, the conduit 14 is open.

As is particularly clear from Fig. 9, at its first end part 31 the friction element is provided with a first transverse hole 33 in the material quantity 30 which closes the conduit 14. This hole 33 serves to receive the transverse first protrusion 23 of the metal rod.

As can be seen from Fig. 10, the material quantity 34 which delimits the transverse first hole 33 will be deformed when mounted on the metal rod 2. This ensures a retaining grip between the friction element 8 and the metal rod 2, so that the friction element cannot be inadvertently displaced in the longitudinal direction or the transverse direction. The engagement between the first protrusion 23 and the first transverse hole 33 as well as the material quantity 34 can be said to constitute the first retaining means.

The second protrusions 12 and the second holes 13 can be said to constitute second retaining means between the friction element 8 and the metal rod 2.

Fig. 7 shows that the metal rod 2 at its outermost second end 22 is provided with a groove 35. This groove 35 serves to receive a protruding material part 36 at the first end 31 of the friction element 8.

As can be seen from Fig. 10, it is hereby ensured that the outer end face 37 of the metal rod 2 lies level with the outer end face 38 of the friction element 8, the friction element face 39 being in abutment with the face 40 of the metal rod 2 in the groove 35.

In Fig. 8, the second holes 30 of the friction element 8 are shown with an opening 41 that has a smaller cross-section than that of the holes at a central part 42 of the second holes 13. This achieves a secure retention of the transverse second protrusions 12. As is particularly clear from Fig. 10, after the introduction of the transverse second protrusions 12, an elastic deformation of the friction element material will be provided, which contributes to the safe retention, as the second protrusions 12 are received in the second holes 13 with a clamping effect.

Similarly, the first protrusion 23 of the spectacle rod will have a size larger than the transverse first hole 33 of the friction element, so that, here too, receiving takes place with a clamping effect.

Fig. 6 shows that the metal rod 2 in an intermediate part 43 has a abutment face 44 at the end of the recess 11. This abutment face 44 serves for abutment with an end face 45 (see Fig. 8) of the friction element 8 when this is mounted on the metal rod 2. This establishes further safety against an accidental displacement of the friction element 8 relative to the metal rod 2.

## Claims

1. A spectacle rod with a first end part (22') intended for connection with a front piece (4), as well as a second end part (22) intended to be bent to form an ear bend (7), said spectacle rod having a longitudinal direction (24) and a transverse direction (25), and said spectacle rod being formed, at least above the second end part (22) of the spectacle rod, by a plate-shaped rod (2) having side faces (17) as well as bottom and top faces (19, 20), and wherein a friction element (8) made from an elastic, compliant material is connected to the plate-shaped rod (2) in a position at the ear bend (7) for contact behind the ear of a user, and wherein the plate-shaped rod (2) has a first transverse protrusion (23), which first transverse protrusion (23) is directed in the transverse direction (25) and obliquely in the longitudinal direction (24) in order to form, together with the second end part of the metal rod, a longitudinally open recess (26), and wherein, in the first end part (31) of the friction element, a first transverse hole (33) is provided for receiving the first transverse protrusion(23) of the plate-shaped rod, and wherein the plate-shaped rod is a metal rod, and wherein the friction element (8) is conduit-shaped so that the conduit walls (15) and bottom (15') cover the side faces (20) and the bottom face (19) of the metal rod, and wherein the first transverse hole (33) of the friction element is formed in the material quantity (30) and directed in the transverse direction (25) in order to receive the first transverse protrusion (23) of the metal rod, and wherein elastic material at the first end part (31) of the friction element is received in the open recess (26) of the metal rod, so that the first transverse protrusion (23) and the recess (26) form first retaining means, and wherein between the walls (15) and the bottom (15') of the conduit and the side faces (17) of the metal rod, further retaining means are provided which prevent the displacement of the friction element in the longitudinal direction (24) and transverse direction (25) of the metal rod, **characterized in that** the first transverse protrusion (23) of the plate-shaped rod (2) is provided at its outermost second end (22), **in that** the longitudinally open recess (26) is form, together with the outermost second end part (22) of the metal rod, which longitudinally open recess (26) has at its opening (27) a smaller cross-section than at a central part (28) of the recess (26), **in that** the friction element (8) at a first end of the conduit (14) is closed by a material quantity (30) at the first end (31) of the friction element, **in that** the first transverse hole (33) of the friction element is also directed obliquely in the longitudinal direction (24), **in that** elastic material at the first end part (31) of the friction element is received in the open recess (26) of the metal rod in an elastically compressed state.

2. The spectacle rod according to claim 1, **characterised in that** the metal rod (2) at its bottom face (19) is provided with transverse second protrusions (12) for releasable snap engagement with second holes (13) in the bottom (15') of the conduit, wherein the second protrusions (12) at their connection to the metal rod (2) have a smaller cross-section than that of the second protrusions at a distance from the metal rod (2), so that the second protrusions (12) are retained in the second holes (13) at the bottom (15') of the conduit due to the elastic compliance of the friction element (8) material.

3. The spectacle rod according to claims 1 or 2, **characterised in that** a transverse protrusion (29) is formed at the opening (27) of the recess (26), preferably a hook-shaped protrusion (29), on the first transverse protrusion (23) and/or on the outermost second end part (22) of the metal rod.

4. The spectacle rod according to claims 1, 2 or 3, **characterised in that** the first hole (33) in the friction element (8) is made with a size smaller than that of the first protrusion (23) of the metal rod, so that the first protrusion (23) of the metal rod is received therein with a clamping effect.

5. The spectacle rod according to any of the previous claims, **characterised in that** the conduit (14) is formed with a smaller width than the thickness of the metal rod (2), so that the conduit side walls (15) are in elastic abutment with the side faces (17) of the metal rod.

6. The spectacle rod according to any of the previous claims, **characterised in that** the metal rod (2) in an intermediate part (43), at the side facing the second protrusions (12) of the metal rod, has a abutment face (44) for an end face (45) of the friction element (8).

7. The spectacle rod according to any of the previous claims, **characterised in that** the friction element (8) covers at least part of the outermost end face of the second end part (22) of the metal rod.

8. The spectacle rod according to any of the previous claims, **characterised in that** the metal rod (2) is made from titanium.

9. The spectacle rod according to any of the previous claims, **characterised in that** the side walls (15) of the friction element conduit (14) have decreasing thickness towards the side faces (17) of the metal rod to form a smooth transition.

10. The spectacle rod according to any of the previous claims, **characterised in that** the metal rod (2) at its outermost second end part (22) has a groove (35), where an end part (36) of the friction element (8) is in abutment.

## Patentansprüche

1. Brillenstange mit einem ersten Endteil (22'), das zur Verbindung mit einem Vorderstück (4) bestimmt ist, sowie einem zweiten Endteil (22), das dazu bestimmt ist, zum Bilden eines Ohrbogens (7) gebogen zu werden, wobei die Brillenstange eine Längsrichtung (24) und eine Querrichtung (25) aufweist und die Brillenstange mindestens oberhalb des zweiten Endteils (22) der Brillenstange durch eine plattenförmige Stange (2) gebildet ist, die Seitenflächen (17) sowie eine Boden- und Deckfläche (19, 20) aufweist und wobei ein Reibungselement (8), das aus einem elastischen nachgiebigen Material hergestellt ist, mit der plattenförmigen Stange (2) in einer Position an dem Ohrbogen (7) zum Kontakt hinter dem Ohr eines Benutzers verbunden ist, und wobei die plattenförmige Stange (2) einen ersten Quervorsprung (23) aufweist, wobei die erste Quervorsprung (23) in der Querrichtung (25) und schräg in der Längsrichtung (24) ausgerichtet ist, um gemeinsam mit dem zweiten Endteil der Metallstange eine in Längsrichtung geöffnete Aussparung (26) zu bilden, und wobei in dem ersten Endteil (31) des Reibungselements ein erstes Querloch (33) zum Aufnehmen des ersten quer Quervorsprungs (23) der plattenförmigen Stange bereitgestellt ist und wobei die plattenförmige Stange eine Metallstange ist und wobei das Reibungselement (8) kanalförmig ist, sodass die Kanalwände (15) und der Boden (15') die Seitenflächen (20) und die Bodenfläche (19) der Metallstange verdecken, und wobei das erste Querloch (33) des Reibungselements in der Materialmenge (30) gebildet ist und in der Querrichtung (25) ausgerichtet ist, um den ersten Quervorsprung (23) der Metallstange aufzunehmen, und wobei elastisches Material an dem ersten Endteil (31) des Reibungselements in der geöffneten Aussparung (26) der Metallstange aufgenommen ist, sodass der erste Quervorsprung (23) und die Aussparung (26) erste Haltemittel bilden, und wobei zwischen den Wänden (15) und dem Boden (15') des Kanals und den Seitenflächen (17) der Metallstange ferner Haltemittel bereitgestellt sind, die die Verschiebung des Reibungselements in der Längsrichtung (24) und Querrichtung (25) der Metallstange verhindern, **gekennzeichnet dadurch, dass** der erste Quervorsprung (23) der plattenförmigen Stange (2) an ihrem äußersten zweiten Ende (22) bereitgestellt ist, **dass** die in Längsrichtung geöffnete Aussparung (26) zusammen mit dem äußersten zweiten Endteil (22) der Metallstange gebildet ist, wobei die in Längsrichtung geöffnete Aussparung (26) an ihrer Öffnung (27) einen geringeren Querschnitt aufweist als an einem zentralen Teil (28) der Aussparung (26), **dass** das Reibungselement (8) an einem ersten Ende des Kanals (14) durch eine Materialmenge (30) an dem ersten Ende (31) des Reibungselements geschlossen ist, **dass** das erste Querloch (33) des Reibungselements zudem schräg in der Längsrichtung (24) ausgerichtet ist, **dass** elastisches Material an dem ersten Ende (31) des Reibungselements in der geöffneten Aussparung (26) des Metallstabs in einem elastisch verdichteten Zustand aufgenommen ist.

2. Brillenstange nach Anspruch 1, **dadurch gekennzeichnet, dass** die Metallstange (2) an ihrer Bodenfläche (19) mit zweiten Quervorsprüngen (12) bereitgestellt ist, die in zweite Löcher (13) in dem Boden (15') des Kanals lösbar einrasten können, wobei die zweiten Vorsprünge (12) an ihrer Verbindung mit der Metallstange (2) einen geringeren Querschnitt aufweisen als die zweiten Vorsprünge in einer Entfernung von der Metallstange (2), sodass die zweiten Vorsprünge (12) aufgrund der elastischen Nachgiebigkeit des Reibungselementmaterials (8) in den zweiten Löchern (13) an dem Boden (15') des Kanals gehalten werden.

3. Brillenstange nach Anspruch 1 oder 2, **dadurch gekennzeichnet, dass** ein Quervorsprung (29) an der Öffnung (27) der Aussparung (26) gebildet ist, vorzugsweise ein Vorsprung (29) in Hakenform, an dem ersten Quervorsprung (23) und/oder an dem äußersten zweiten Endteil (22) der Metallstange.

4. Brillenstange nach Anspruch 1, 2 oder 3, **dadurch gekennzeichnet, dass** das erste Loch (33) in dem Reibungselement (8) mit einer geringeren Größe hergestellt ist als der erste Vorsprung (23) der Metallstange, sodass der erste Vorsprung (23) der Metallstange darin mit einer Klemmwirkung aufgenommen ist.

5. Brillenstange nach einem der vorherigen Ansprüche, **dadurch gekennzeichnet, dass** der Kanal(14) mit einer geringeren Breite als die Dicke der Metallstange (2) hergestellt ist, sodass die Kanalseitenwände (15) in elastischer Anlage an den Seitenflächen (17) der Metallstange sind.

6. Brillenstange nach einem der vorstehenden Ansprüche, **dadurch gekennzeichnet, dass** die Metallstange (2) in einem Zwischenteil (43) an der den zweiten Vorsprüngen (12) der Metallstange zugewandten Seite eine Anlagefläche (44) für eine Endfläche (45) des Reibungselements (8) aufweist.

7. Brillenstange nach einem der vorstehenden Ansprüche, **dadurch gekennzeichnet, dass** das Reibungselement (8) mindestens einen Teil der äußersten Endfläche des zweiten Endteils (22) der Metallstange verdeckt.

8. Brillenstange nach einem der vorhergehenden Ansprüche, **dadurch gekennzeichnet, dass** die Metallstange (2) aus Titan hergestellt ist.

9. Brillenstange nach einem der vorstehenden Ansprüche, **dadurch gekennzeichnet, dass** die Seitenwände (15) des Reibungselementkanals (14) eine zu den Seitenflächen (17) der Metallstange hin abnehmende Dicke aufweisen, um einen glatten Übergang zu bilden.

10. Brillenstange nach einem der vorhergehenden Ansprüche, **dadurch gekennzeichnet, dass** die Metallstange (2) an ihrem äußersten zweiten Endteil (22) eine Nut (35) aufweist, an der ein Endteil (36) des Reibungselements (8) anliegt.

## Revendications

1. Tige de lunettes comportant une première partie d'extrémité (22') destinée à être reliée à une pièce avant (4), ainsi qu'une seconde partie d'extrémité (22) destinée à être courbée pour former un élément de courbure d'oreille (7), ladite tige de lunettes ayant une direction longitudinale (24) et une direction transversale (25), et ladite tige de lunettes étant formée, au moins au-dessus de la seconde partie d'extrémité (22) de la tige de lunettes, par une tige en forme de plaque (2) présentant des faces latérales (17) ainsi que des faces inférieure et supérieure (19, 20), et dans laquelle un élément de frottement (8) constitué d'un matériau élastique et souple est relié à la tige en forme de plaque (2) dans une position au niveau de l'élément de courbure d'oreille (7) pour un contact derrière l'oreille d'un utilisateur, et dans laquelle la tige en forme de plaque (2) présente une première saillie transversale (23), laquelle première saillie transversale (23) est orientée dans la direction transversale (25) et obliquement dans la direction longitudinale (24) afin de former, conjointement avec la seconde partie d'extrémité de la tige métallique, un évidement ouvert longitudinalement (26), et dans laquelle, dans la première partie d'extrémité (31) de l'élément de frottement, un premier trou transversal (33) est ménagé pour recevoir la première saillie transversale (23) de la tige en forme de plaque, et dans laquelle la tige en forme de plaque est une tige métallique, et dans laquelle l'élément de frottement (8) est en forme de conduit de sorte que les parois (15) et le fond (15') du conduit recouvrent les faces latérales (20) et la face inférieure (19) de la tige métallique, et dans laquelle le premier trou transversal (33) de l'élément de frottement est formé dans la quantité de matériau (30) et orienté dans la direction transversale (25) afin de recevoir la première saillie transversale (23) de la tige métallique, et dans laquelle le matériau élastique au niveau de la première partie d'extrémité (31) de l'élément de frottement est reçu dans l'évidement ouvert (26) de la tige métallique, de sorte que la première saillie transversale (23) et l'évidement (26) forment un premier moyen de retenue, et dans laquelle entre les parois (15) et le fond (15') du conduit et les faces latérales (17) de la tige métallique, sont prévus des moyens de retenue supplémentaires qui empêchent le déplacement de l'élément de frottement dans la direction longitudinale (24) et dans la direction transversale (25) de la tige métallique, **caractérisée en ce que** la première saillie transversale (23) de la tige en forme de plaque (2) est prévue au niveau de sa seconde extrémité la plus à l'extérieur (22), **en ce que** l'évidement ouvert longitudinalement (26) est formé, conjointement avec la seconde partie d'extrémité la plus à l'extérieur (22) de la tige métallique, lequel évidement ouvert longitudinalement (26) présente au niveau de son ouverture (27) une section transversale plus petite qu'au niveau de la partie centrale (28) de l'évidement (26), **en ce que** l'élément de frottement (8) est fermé à une première extrémité du conduit (14) par une quantité de matériau (30) au niveau de la première extrémité (31) de l'élément de frottement, **en ce que** le premier trou transversal (33) de l'élément de frottement est également orienté obliquement dans la direction longitudinale (24), **en ce que** le matériau élastique au niveau de la première partie d'extrémité (31) de l'élément de frottement est reçu dans l'évidement ouvert (26) de la tige métallique dans un état comprimé élastiquement.

2. Tige de lunettes selon la revendication 1, **caractérisée en ce que** la tige métallique (2) comprend, au niveau de sa face inférieure (19), des secondes saillies transversales (12) destinées à venir en prise par encliquetage de manière amovible avec des seconds trous (13) dans le fond (15') du conduit, dans laquelle les secondes saillies (12), au niveau de leur raccordement à la tige métallique (2), présentent une section transversale plus petite que celle des secondes saillies à une certaine distance de la tige métallique (2), de sorte que les secondes saillies (12) sont retenues dans les seconds trous (13) au niveau du fond (15') du conduit grâce à la conformabilité élastique du matériau de l'élément de frottement (8).

3. Tige de lunettes selon les revendications 1 ou 2, **caractérisée en ce qu'**une saillie transversale (29) est formée au niveau de l'ouverture (27) de l'évidement (26), de préférence une saillie en forme de crochet (29), sur la première saillie transversale (23) et/ou sur la seconde partie d'extrémité la plus à l'extérieur (22) de la tige métallique.

4. Tige de lunettes selon les revendications 1, 2 ou 3, **caractérisée en ce que** le premier trou (33) dans l'élément de frottement (8) est construit de sorte à avoir une taille inférieure à celle de la première saillie (23) de la tige métallique, de sorte que la première saillie (23) de la tige métallique est reçue en son sein avec un effet de serrage.

5. Tige de lunettes selon l'une quelconque des revendications précédentes, **caractérisée en ce que** le conduit (14) est formé avec une largeur inférieure à l'épaisseur de la tige métallique (2), de sorte que les parois latérales de conduit (15) viennent en butée élastique avec les faces latérales (17) de la tige métallique.

6. Tige de lunettes selon l'une quelconque des revendications précédentes, **caractérisée en ce que** la tige métallique (2) présente, dans une partie intermédiaire (43), au niveau du côté faisant face aux secondes saillies (12) de la tige métallique, une face de butée (44) pour une face d'extrémité (45) de l'élément de frottement (8).

7. Tige de lunettes selon l'une quelconque des revendications précédentes, **caractérisée en ce que** l'élément de frottement (8) recouvre au moins une partie de la face d'extrémité la plus à l'extérieur de la seconde partie d'extrémité (22) de la tige métallique.

8. Tige de lunettes selon l'une quelconque des revendications précédentes, **caractérisée en ce que** la tige métallique (2) est en titane.

9. Tige de lunettes selon l'une quelconque des revendications précédentes, **caractérisée en ce que** les parois latérales (15) du conduit d'élément de frottement (14) ont une épaisseur décroissante vers les faces latérales (17) de la tige métallique pour former une transition douce.

10. Tige de lunettes selon l'une quelconque des revendications précédentes, **caractérisée en ce que** la tige métallique (2) présente une rainure (35) au niveau de sa seconde partie d'extrémité la plus à l'extérieur (22), dans laquelle une partie d'extrémité (36) de l'élément de frottement (8) est en butée.
